# FASCICULE DE BREVET EUROPEEN

(11) **EP 0 465 307 B1**
(45) Date de publication et mention de la délivrance du brevet: **23.08.1995**
(21) Numéro de dépôt: 91401743.9
(22) Date de dépôt: 27.06.1991
(51) Int. Cl.: C03C 17/00, C03C 17/04

(54) **Procédé pour imprimer un cadre décoratif sur un vitrage, et dispositif pour sa mise en oeuvre**
Verfahren zum Aufdrucken eines dekorativen Rahmens auf Verglasung und Vorrichtung zur Durchführung dieses Verfahrens
Method for printing a decorative frame on glazing and device for realizing this method

(30) Priorité: 30.06.1990 DE 4020972
(43) Date de publication de la demande: 08.01.1992
(73) Titulaire: SAINT-GOBAIN VITRAGE, 92400 Courbevoie (FR); VEGLA Vereinigte Glaswerke GmbH, D-52066 Aachen (DE)
(72) Inventeur: Hahn, Dieter, Ubach (DE); Börger, Manfred, Aachen.Kornelimünster (DE)
(74) Mandataire: Muller, René

(56) Documents cités:
- EP-A- 84 262
- EP-A- 91 776
- FR-A- 2 061 883
- GB-A- 2 072 159
- US-A- 2 781 282
- K.F.Ehlers: SIEBDRUCK, Handbuch für den Siebdrucker, Verlag Georg D.W. Callwey (1980).

## Description

La présente invention concerne un procédé pour imprimer par sérigraphie un décor comportant un dépôt d'encre fermé en forme de cadre, sur un vitrage.

Les vitrages automobiles sont pourvus, dans une large proportion, d'une couche d'encre à cuire au four en forme de cadre opaque. L'encre est appliquée par sérigraphie sur la surface du verre et est cuite à des températures de 550 à 600°C ou davantage. En particulier, les vitrages automobiles qui sont collés à la carrosserie sont pourvus de cadres décoratifs de ce type. De même, les vitrages destinés aux toits vitrés sont habituellement pourvus de tels cadres décoratifs, des vitrages pour toits vitrés de ce type étant pourvus, sur la surface située à l'intérieur de ce cadre décoratif, en règle générale, d'un décor tramé qui est appliqué avantageusement au cours de la même opération d'impression que le cadre décoratif pour réduire la pénétration du rayonnement solaire.

Souvent, les vitrages, lorsqu'ils sont montés, ne sont plus garnis d'un encadrement en profilés enserrant leur bord ou le chevauchant, mais sont au contraire visibles de l'extérieur jusqu'à leur bord. Cela signifie que l'impression décorative en forme de cadre est également visible jusqu'au bord périphérique du vitrage. Des irrégularités de la limite extérieure du cadre décoratif, en particulier des espacements légèrement différents entre la limite extérieure du cadre décoratif et le bord du vitrage, s'avèrent très gênantes. C'est pourquoi, il est d'un grand intérêt d'imprimer la couche d'encre formant le cadre décoratif le long de la totalité de la périphérie du vitrage avec un écart constant du bord du vitrage ou, de préférence, directement jusqu'au bord périphérique du vitrage.

Dans les conditions pratiques, il est toutefois extrêmement difficile de réaliser, par sérigraphie, une impression exacte jusqu'au bord du vitrage. Dans le cas d'un procédé de sérigraphie, il est nécessaire de faire en sorte que la surface d'impression du pochoir ne s'étende pas au-delà du bord du vitrage. Sinon, le bord du vitrage et la face inférieure du pochoir seront souillés par l'encre sérigraphique, ce qui rend les vitrages et/ou les pochoirs inutilisables. En vue de produire une sérigraphie nette jusqu'au bord du vitrage, il faut que le contour extérieur des vitrages, c'est-à-dire leur forme et leur grandeur, corresponde exactement au contour extérieur de la surface d'impression du pochoir. Les procédés de fabrication courants des vitrages ne respectent qu'imparfaitement cette condition, car les procédés utilisés actuellement pour couper et polir les vitrages conduisent obligatoirement à des tolérances de surface qui, dans chacune des deux dimensions de la surface du vitrage, peuvent atteindre jusqu'à environ 1,5 mm. C'est pourquoi, il n'est pas possible de réaliser l'impression précise souhaitée jusqu'au bord du vitrage au moyen de la technique de sérigraphie connue jusqu'à présent, par exemple du document EP-A-0 084 262. Le document US-A-2 781 282 décrit l'utilisation de masques pour le dépôt de produits en phase gazeuse. Le document Siebdruck, Handbuch fuer den Siebdrucker : Einrichtung Werkstoffe Technik, de K.F. Ehlers, Verlag Georg D.W. Callwey (1980), pages 93-96, décrit un dispositif général pour l'impression d'un support en verre, ce dispositif comprenant une table d'impression et une forme d'impression.

L'invention a pour but de réaliser le procédé pour imprimer des villages par sérigraphie, d'une manière telle qu'indépendamment des tolérances de surface des vitrages, le cadre décoratif imprimé atteigne, le long de l'ensemble de la périphérie du village, directement le bord périphérique de ce vitrage.

Conformément à l'invention, ce but est atteint par le fait qu'au moins deux surfaces partielles mutuellement complémentaires du décor sont appliquées au cours d'au moins deux opérations d'impression successives, au moins un bord de la première surface partielle étant disposé au ras du premier bord correspondant du vitrage et au moins un bord des autres surfaces partielles étant disposé au ras d'un autre bord du vitrage et les surfaces partielles mutuellement complémentaires du décor se chevauchant mutuellement au moins de la grandeur des tolérances de surface des vitrages.

Suivant le procédé conforme à l'invention, l'opération de sérigraphie se déroule donc, par exemple, en deux étapes successives à l'aide de deux pochoirs différents. Les patrons sur les deux pochoirs ont, dans ce cas, une configuration telle que, par exemple, dans le cas d'un vitrage à quatre bords latéraux, à chaque opération d'impression, l'échantillon d'impression se termine le long de deux bords latéraux voisins à une distance de ces bords latéraux telle que, même dans le cas de vitrages qui présentent les plus petites dimensions du domaine des tolérances, une bande marginale le long de ces deux bords latéraux du vitrage reste exempte d'encre sérigraphique. De cette manière, au cours de la première opération d'impression, le long des deux bords du vitrage, aucune souillure de l'écran sérigraphique et/ou des bords du vitrage ne peut se produire. Le long des deux autres bords, le dépôt de l'encre sérigraphique est toutefois effectué au cours de la première opération d'impression directement jusqu'aux bords du vitrage. En général, ceci est réalisable sans aucune difficulté, étant donné que les vitrages à imprimer et les pochoirs peuvent être positionnés le long de deux bords voisins avec une précision relativement élevée. De manière correspondante, une deuxième opération d'impression suit, au cours de laquelle la position du vitrage ou celle du deuxième pochoir, ou, le cas échéant, la position à la fois du vitrage et du deuxième pochoir est choisie ou modifiée d'une manière telle que les deux autres bords du vitrage coïncident avec les lignes de délimitation extérieures de la surface d'impression. Les tolérances en général inévitables des dimensions des surfaces des vitrages ne se traduisent plus, dans le cas de ce procédé, que par le fait que le degré de chevauchement des deux surfaces de décoration partielles peut être différent d'un vitrage à l'autre.

Des formes de réalisation utiles et des développements avantageux de l'invention ressortiront des revendications dépendantes et de la description suivante des exemples de réalisation pour le procédé conforme à l'invention, donnée avec référence aux dessins annexés, dans lesquels :
la Fig. 1 illustre la structure de base d'un dispositif approprié pour la mise en oeuvre du procédé conforme à l'invention;
la Fig. 2 illustre une forme de réalisation d'un vitrage rectangulaire imprimé conformément à l'invention, comportant une impression décorative en forme de cadre;
la Fig. 3 est une forme de réalisation d'un vitrage imprimé conformément à l'invention comportant une impression décorative en forme de cadre et une impression décorative tramée à l'intérieur du cadre;
la Fig. 4 illustre le vitrage représenté à la Fig. 3 après l'impression du premier décor partiel, et
la Fig. 5 est une vue en coupe du pochoir pour le deuxième décor partiel du vitrage représenté à la Fig. 3.

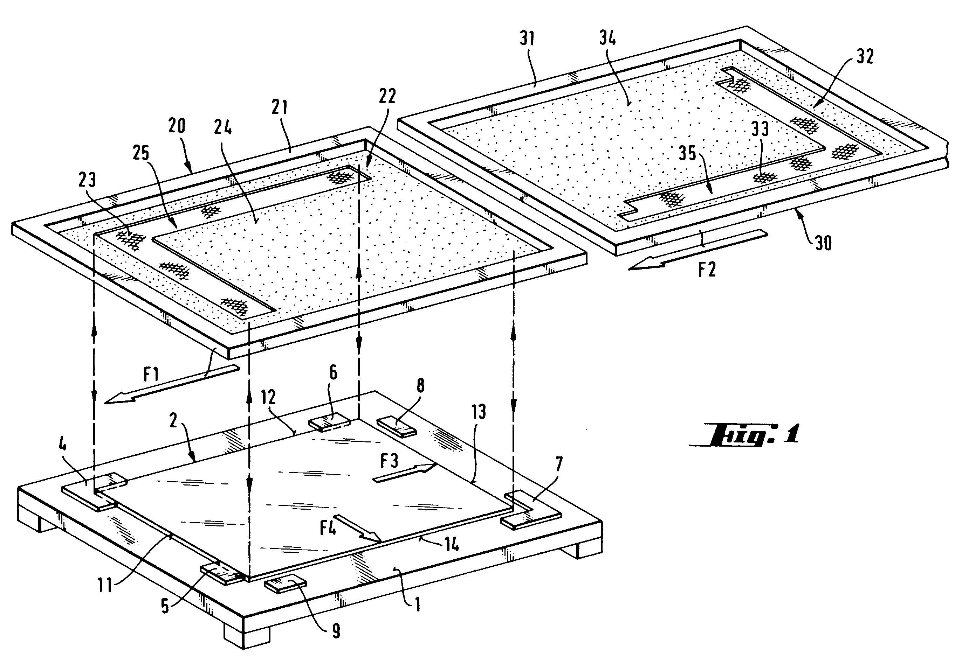

Comme le montre la Fig. 1, un dispositif de sérigraphie comprend, pour la mise en oeuvre du nouveau procédé, en substance, une table de support 1 pour le dépôt et le positionnement du vitrage 2, une première forme d'impression 20 et une deuxième forme d'impression 30. Les formes d'impression 20 et 30 sont, de la manière habituelle, montées au-dessus de la table de support 1, de manière à pouvoir coulisser sur des rails de guidage, non illustrés, et peuvent être déplacées sur ces rails de guidage à l'aide de moyens connus comme tels et être positionnés par rapport à la table de support 1.

Sur la table de support 1, sont disposés divers taquets 4 à 9 qui servent au positionnement du vitrage 2. Les taquets 4, 5 et 6 servent à déterminer la position des bords 11 et 12 du vitrage 2 sur la table de support 1. Les taquets 7, 8 et 9 ont pour but de déterminer la position des bords 13 et 14 sur la table de support 1. Les taquets 4, 5, 6, d'une part, et 7, 8, 9, d'autre part, délimitent une surface supérieure à celle du vitrage 2, de sorte que le vitrage 2 est disposé contre les taquets 4, 5 et 6 et adopte ainsi sa première position, ou contre les taquets 7, 8 et 9 et adopte ainsi sa deuxième position.

Dans la première position, qui est représentée à la Fig. 1, le vitrage 2 est imprimé au moyen de la forme d'impression 20. La forme d'impression 20 comprend le châssis de pochoir 21 et le pochoir 22 qui est formé par tissu sérigraphique 23 et le film de pochoir 24. Le tissu sérigraphique 23 non recouvert par le film de pochoir 24 forme la première surface partielle 25 de la couche décorative à imprimer. Lorsque, à l'aide de la première forme d'impression 20, la première surface partielle de la couche décorative est imprimée sur le vitrage 2, la forme d'impression 20 est écartée latéralement du domaine de la table de support 1 dans le sens de la flèche F₁ et la forme d'impression 30 est déplacée dans la position d'impression dans le sens de la flèche F₂.

Le vitrage 2 est à présent déplacé dans le sens des flèches F₃ et F₄, jusqu'à ce que les bords 13 et 14 soient disposés contre les taquets 7, 8 et 9 et le vitrage 2 adopte de cette manière sa deuxième position destinée à l'application de l'impression de la deuxième surface partielle. Lorsque l'encre sérigraphique imprimée au cours de la première étape du processus est sèche, ce qui peut éventuellement être réalisé dans un poste de séchage séparé, la deuxième surface partielle est imprimée à l'aide de la forme d'impression 30. La forme d'impression 30 comporte à nouveau un cadre de pochoir 31 et un pochoir 32 qui est formé par le tissu sérigraphique 33 et par le film 34 recouvrant le tissu sérigraphique 33 et qui forme la surface partielle 35 de la couche décorative à imprimer. La forme d'impression 30 est déplacée au-dessus de la table de support 1 et y est positionnée. La deuxième opération d'impression est ensuite mise en oeuvre.

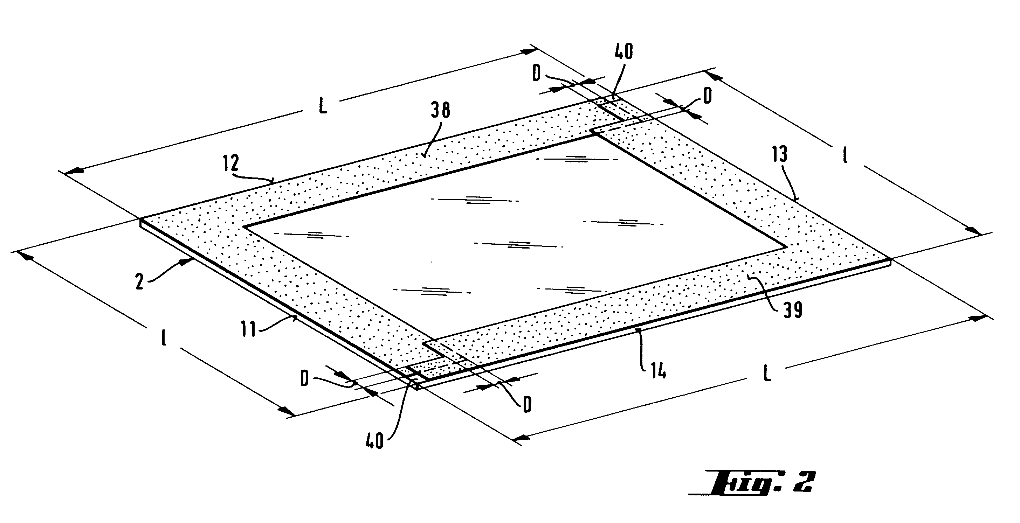

Comme le montre la Fig. 2, après la deuxième opération d'impression, les deux surfaces décoratives partielles 38 et 39 forment un cadre décoratif fermé. Les longueurs L et l des surfaces décoratives partielles 38 et 39 sont légèrement inférieures aux longueurs des bords correspondants des bords des plus petits vitrages à imprimer. La grandeur D du chevauchement des deux surfaces décoratives partielles correspond au moins à la largeur de tolérance des dimensions du vitrage et est, de préférence, un peu plus grande. Dans deux coins du vitrage 2 subsistent des petites zones de coin 40 dont la grandeur de la surface s'élève à quelques millimètres carrés et qui, lors des deux opérations d'impression sérigraphique, restent exemptes d'encre sérigraphique. Sur la zone de coin 40, il est possible d'appliquer l'encre sérigraphique à la main ou d'une autre manière, lorsque l'on souhaite disposer d'un revêtement sans lacune, dans ces zones, jusqu'au bord.

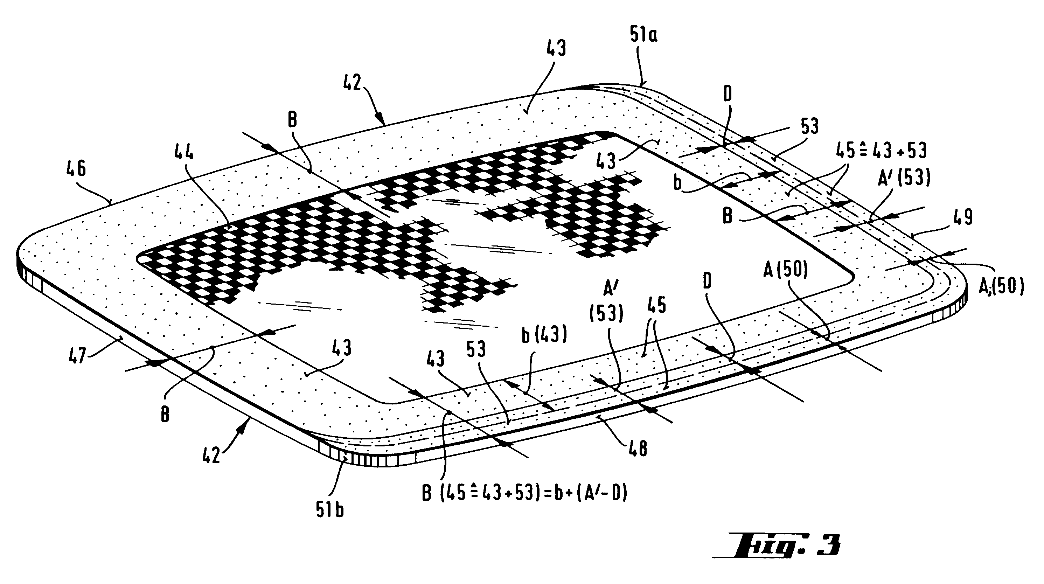

Sur la Fig. 3 est représenté un vitrage 42 avec des coins arrondis qui est utilisé à titre de toit vitré pour automobile et qui présente un cadre décoratif fermé 43, 45 le long de sa périphérie et comporte un décor tramé 44 à l'intérieur du cadre décoratif 43. Le décor tramé 44 sert à réduire la pénétration du rayonnement solaire et, comme c'est le cas pour le cadre décoratif 43, il est appliqué par sérigraphie et cuit au four à haute température.

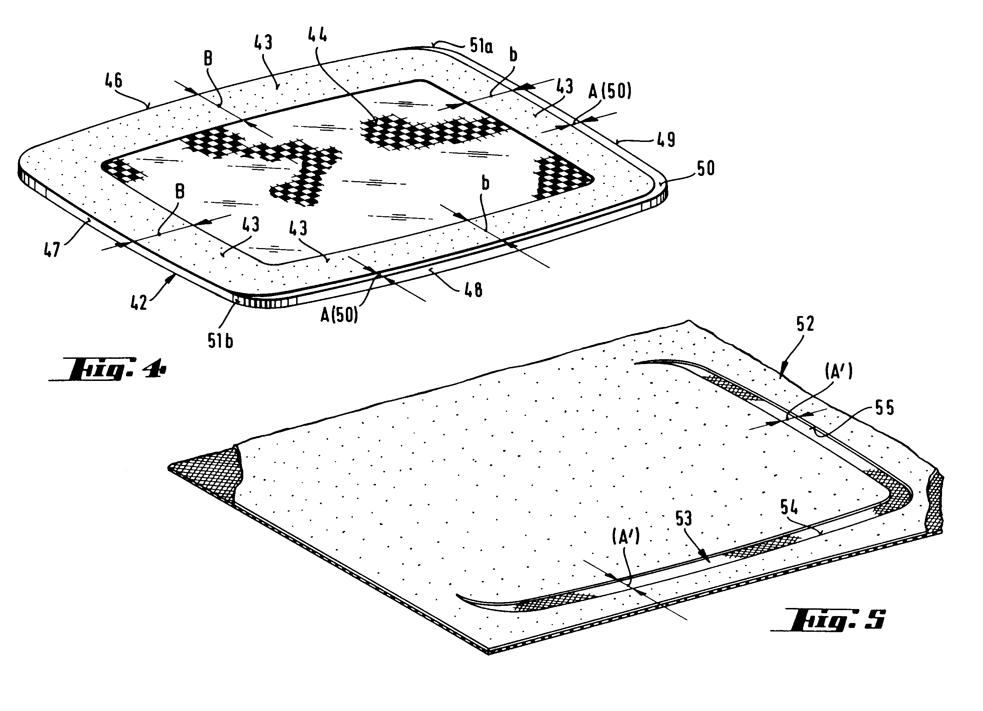

Un tel vitrage est également fabriqué avec succès suivant le procédé conforme à l'invention. A cet effet, le vitrage 42 est à nouveau imprimé en deux étapes. Lors de la première étape, le vitrage 42 est pourvu d'un cadre décoratif partiel 43, comme illustré à la Fig. 4. Le cadre décoratif partiel 43 présente, le long de son côté longitudinal 46 et de son côté transversal 47, sa largeur finale B, mais le long de son côté longitudinal 48 et le long de son côté transversal 49, une largeur comparativement plus petite b, de sorte que le cadre décoratif partiel 43 le long des côtés 48 et 49 se termine à une distance A des bords du vitrage. Le champ tramé 44 est également imprimé lors la première étape du processus. Au terme de cette première étape, le vitrage 42, à l'exception d'une fine bande marginale 50, est déjà pourvu, le long des côtés 48 et 49, d'une décoration complète. La bande marginale 50 laissée libre se prolonge jusque sur les zones des coins arrondis 51a et 51b où elle se rétrécit chaque fois.

Au cours de la deuxième étape du processus, la bande marginale 50 laissée libre est imprimée au moyen d'un pochoir 52 tel que représenté partiellement à la Fig. 5. La surface d'impression 53 correspond à la forme de la bande marginale 50 mais présente, pour la formation du chevauchement D, une largeur A′ supérieure à celle-ci. Avant l'opération d'impression, le pochoir 52 et le vitrage 42 sont orientés l'un par rapport à l'autre d'une manière telle que les lignes de délimitation extérieures 54 et 55 de la surface d'impression 53 coïncident avec les bords 48 et 49 correspondants du vitrage 42. Lorsque la deuxième opération d'impression est exécutée, le cadre décoratif 43, 45 présente sa largeur complète B sur tout le pourtour et s'étend jusqu'au ras des bords du vitrage.

L'invention concerne également le dispositif pour la mise en oeuvre du procédé d'impression.

## Revendications

1. Procédé pour imprimer par sérigraphie un décor comportant un dépôt d'encre fermé en forme de cadre, sur un village, caractérisé en ce qu'au moins deux surfaces partielles mutuellement complémentaires (38, 39, 43, 53) du décor sont appliquées au cours d'au moins deux opérations d'impressions successives, au moins un bord de la première surface partielle (38, 43) étant disposé au ras du premier bord correspondant du vitrage et au moins un bord des autres surfaces partielles (39, 53) étant disposé au ras d'un autre bord du village et les surfaces partielles mutuellement complémentaires (38, 39, 43, 53) du décor se chevauchant mutuellement au moins de la grandeur des tolérances de surface des vitrages.

2. Procédé suivant la revendication 1, caractérisé en ce que, dans le cas d'un vitrage (2) à quatre bords latéraux (11, 12, 13, 14), au cours de la première opération d'impression, le cadre décoratif est imprimé le long de deux bords latéraux (11, 12) adjacents l'un à l'autre et, au cours de la deuxième opération d'impression, le cadre décoratif est imprimé le long des deux autres bords latéraux (13, 14), le chevauchement (D) des deux parties du cadre décoratif se produisant dans les zones de coin correspondantes.

3. Procédé suivant la revendication 1, caractérisé en ce que, dans le cas d'un village (42) à quatre bords latéraux, la surface partielle (43) du cadre décoratif (45) appliquée au cours de la première opération d'impression forme un cadre décoratif fermé, qui présente toutefois, le long des deux côtés (48, 49) qui ne sont pas alignés par rapport au pochoir, compte tenu d'une bande marginale (50) laissée libre, une largeur inférieure (b) et que, au cours de la deuxième opération d'impression, la bande marginale libre (50) est imprimée, au moyen d'un pochoir (52) correspondant, en alignant les bords (54, 55) de la deuxième surface partielle (53) sur les bords correspondants (48, 49) du vitrage (42).

4. Dispositif pour la mise en oeuvre du procédé selon une des revendications 1 à 3, caractérisé en ce qu'il comprend une table support (1) pour le dépôt et le positionnement du vitrage (2), et, montées au-dessus de la table support (1), deux formes d'impression complémentaires (20, 30) pour l'impression d'une encre sous forme d'un cadre décoratif fermé s'étendant jusqu'au bord périphérique du vitrage, ces deux formes d'impression permettant d'imprimer chacune une surface partielle du cadre, les deux surfaces étant complémentaires et se chevauchant d'au moins la grandeur des tolérances de dimensions du vitrage.

5. Vitrage comportant un cadre imprimé obtenu par la mise en oeuvre du procédé selon une des revendications 1 à 3, caractérisé en ce que le cadre imprimé s'étend jusqu'au bord périphérique du vitrage et en ce que le bord périphérique n'est pas souillé d'encre.

## Claims

1. Process for printing a glazing or glass plate with a decoration having a frame-like-closed ink application using screen printing technology, characterized in that at least two complementary partial surfaces (38,39; 43,53) of the decoration are applied in at least two successive printing operations, the first partial surface (38;43) being oriented along at least one edge in edge-flush manner to the corresponding first glazing edge and the further partial surfaces (39;53) are oriented along at least one edge in edge-flush manner to another glazing edge and the complementary partial surfaces (38,39; 43;53) of the decoration reciprocally overlap at least by the amount of the surface tolerances of the glazings.

2. Process according to claim 1, characterized in that in the case of a glazing (2) with four lateral edges (11,12,13,14) the decorative frame is printed in the first printing operation along two adjacent lateral edges (11,12) and in the second printing operation along the two other lateral edges (13,14) and the overlap (D) of the two decorative frame parts occurs in the corresponding corner regions.

3. Process according to claim 1, characterized in that in the case of a glass plate (42) with four lateral edges the first partial surface (43) of the decorative frame (45) applied during the first printing operation forms a closed frame but which, along the two sides (48,49), which are not oriented relative to the screen printing stencil has a smaller width (b) and leaves free a marginal strip (50), whilst in the second printing operation the free marginal strip (50) with a screen printing stencil (52) corresponding thereto and accompanied by the orientation of the edges (54,55) of the second partial printing surface (53) is printed up to the corresponding edges (48,49) of the glass plate (42).

4. Apparatus for performing the process according to one of the claims 1 to 3, characterized in that it incorporates a support table (1) for depositing and positioning the glazing (2) and, mounted above the support table (1), two complementary printing blocks (20,30) for printing ink in the form of a closed decorative frame extending up to the peripheral edge of the glazing, said two printing blocks making it possible to in each case print one partial surface of the frame, the two surfaces being complementary and overlapping by at least the dimensional tolerances of the glazing.

5. Glazing comprising a printed frame obtained by performing the process according to one of the claims 1 to 3, characterized in that the printed frame extends up to the peripheral edge of the glazing and that the peripheral edge is not soiled with ink.

## Patentansprüche

1. Verfahren zum Bedrucken einer Glasscheibe mit einem einen rahmenartigen geschlossenen Farbauftrag aufweisenden Dekor, durch Siebdruck, **dadurch gekennzeichnet,** daß wenigstens zwei einander komplementäre Teilflächen (38,39,43,53) des Dekors in wenigsens zwei aufeinanderfolgenden Druckvorgängen aufgetragen werden, wobei wenigstens eine Kante der ersten Teilfläche (38,43) kantenbündig zu der ersten entsprechenden Kante der Glasscheibe ausgerichtet wird, und wenigstens eine Kante der anderen Teilflächen (39,53) kantenbündig zu einer anderen Kante der Glasscheibe ausgerichtet wird, und die einander komplementären Teilflächen (38,39,43,53) des Dekors sich wenigstens um das Maß der Flächentoleranzen der Fläche der Glasscheiben gegenseitig überlappen.

2. Verfahren nach Anspruch 1, dadurch gekennzeichnet, daß bei einer Glasscheibe (2) mit vier Seitenkanten (11,12,13,14) im ersten Druckvorgang der Dekorrahmen entlang zweier aneinandergrenzenden Seitenkanten (11,12) und im zweiten Druckvorgang der Dekorrahmen entlang der beiden anderen Seitenkanten (13,14) gedruckt wird, wobei die Überlappung (D) der beiden Dekorrahmenteile in den entsprechenden Eckbereichen erfolgt.

3. Verfahren nach Anspruch 1, dadurch gekennzeichnet, daß bei einer Glasscheibe (42) mit vier Seitenkanten die im ersten Druckvorgang aufgebrachte Teilfläche (43) des Dekorrahmens (45) einen geschlossenen Dekorrahmen bildet, der jedoch entlang den beiden Seiten (48,49), die im Verhältnis zur Siebdruckschablone nicht ausgerichtet sind, unter Freilassung eines Randstreifens (50) eine geringere Breite (b) aufweist, und daß im zweiten Druckvorgang der freie Randstreifen (50) mit einer entsprechenden Siebdruckschablone (52) unter Ausrichtung der Kanten (54,55) der zweiten Teilfläche (53) zu den entsprechenden Kanten (48,49) der Glasscheibe (42) bedruckt wird.

4. Vorrichtung zur Durchführung des Verfahrens nach einem der Ansprüche 1 bis 3, dadurch gekennzeichnet, daß sie einen Tisch (1) für die Auflage und die Positionierung der Glasscheibe (2) und zwei oberhalb des Tisches (1) angeordnete komplementäre Druckformen (20,30) zum Drucken einer Druckfarbe in Form eines sich bis zur Umfangskante der Glasscheibe erstreckenden geschlossenen Dekorrahmens aufweist, wobei die beiden Druckformen jeweils den Druck einer Teilfläche des Rahmens erlauben und die beiden Teilflächen komplementär sind und sich wenigstens um das Maß der Toleranzen der Glasscheibenabmessungen überlappen.

5. Glasscheibe mit einem durch das Verfahren nach einem der Ansprüche 1 bis 3 erhaltenen gedruckten Rahmen, dadurch gekennzeichnet, daß der gedruckte Rahmen sich bis zur Umfangskante der Glasscheibe erstreckt, und daß die Umfangskante nicht mit Druckfarbe verunreinigt ist.
